# EUROPÄISCHE PATENTSCHRIFT

(11) **EP 2 151 156 B1**
(45) Veröffentlichungstag und Bekanntmachung des Hinweises auf die Patenterteilung: **23.11.2011**
(21) Anmeldenummer: 09166728.7
(22) Anmeldetag: 29.07.2009
(51) Int. Cl.: A01B 61/02, A01D 75/18, A01F 15/08, A01D 69/00

(54) **Antriebsanordnung und Verfahren zum Antrieb eines landwirtschaftlichen Arbeitsgeräts**
Drive assembly and method for driving an agricultural work device
Système d'entraînement et procédé d'entraînement d'un appareil de travail agricole

(30) Priorität: 07.08.2008 DE 102008041075
(43) Veröffentlichungstag der Anmeldung: 10.02.2010
(73) Patentinhaber: Deere & Company, Moline, IL 61265-8098 (US)
(72) Erfinder: Hel, Sébastien, 70100, Ancier (FR); Biziorek, Stéphane, 70600, Champlitte (FR)
(74) Vertreter: Holst, Sönke

(56) Entgegenhaltungen:
- EP-A1- 1 344 443
- EP-A2- 0 175 916
- DE-A1- 10 145 588
- DE-A1-102005 029 405

## Beschreibung

Die Erfindung betrifft eine Antriebsanordnung und ein Verfahren zum Antrieb eines landwirtschaftlichen Arbeitsgeräts, umfassend:
einen Antriebsmotor, der über eine trennbare Zapfwellenkupplung mit einem Zapfwellenausgang in Antriebsverbindung steht,
einen mit dem Zapfwellenausgang verbundenen oder verbindbaren Antriebsstrang des Arbeitsgeräts, der eine Überlastkupplung umfasst, die den Antriebsstrang öffnet, wenn ein Abschaltmoment überschritten wird, und
eine Steuereinrichtung, die mit einem zur Erfassung des Drehmoments am Zapfwellenausgang eingerichteten Sensor verbunden und betreibbar ist, einen Aktor zu veranlassen, die Zapfwellenkupplung zu trennen, sobald das vom Sensor erfasste Drehmoment einen vorbestimmten Schwellenwert erreicht oder überschreitet.

### Stand der Technik

Bei landwirtschaftlichen Arbeitsgeräten besteht die Gefahr, dass aufgrund von Überlastungen Beschädigungen des Antriebsstrangs oder der angetriebenen Elemente auftreten. So kann bei Ballenpressen oder angebauten oder gezogenen Feldhäckslern ein Emtegutstau zum Stillstand der zur Aufnahme und/oder Weiterförderung des Ernteguts dienenden Elemente führen, der wiederum den Antriebsstrang überlasten kann. Andere Beispiele sind rotierende Bodenbearbeitungswerkzeuge, die bei zu großen Arbeitstiefen oder schweren Bodenverhältnissen überlastet werden können, oder Mähgeräte, die sich an zu dicken Pflanzenteilen festsetzen. Es ist daher üblich, den Antriebsstrang der Arbeitsgeräte durch Überlastkupplungen abzusichern, die den Antriebsstrang auftrennen, wenn ein Abschaltmoment überschritten wird. Hierzu sei auf den Stand der Technik nach DE 295 04 531 U1 und DE 195 38 370 C1 verwiesen.

Weiterhin sind die Zug- oder Trägerfahrzeuge, die ein landwirtschaftliches Arbeitsgerät über ein Feld bewegen und einen Antriebsmotor umfassen, der über eine trennbare Zapfwellenkupplung mit einem Zapfwellenausgang zum Anschluss des Antriebsstrangs des Arbeitsgeräts in Verbindung steht, üblicherweise mit einem Sensor zur Erfassung des Drehmoments am Zapfwellenausgang ausgestattet, der mit einer Steuereinrichtung verbunden ist, die bei Überschreitung eines Schwellenwerts die Zapfwellenkupplung ausschaltet, um Schäden im Zapfwellenantrieb zu verhindern (s. DE 101 45 588 A1). Bei derartigen Anordnungen kann das Abschaltmoment auch vom Arbeitsgerät und dessen Betriebszustand abhängen (DE 34 34 825 A1).

In der Regel schaltet die Überlastkupplung des Arbeitsgeräts bei Drehmomenten ab, die noch nicht zur Abschaltung der Zapfwellenkupplung führen. Der Fahrer des Träger- oder Zugfahrzeugs hat dann keine andere Möglichkeit, als den Grund für die Überlastung manuell zu beseitigen, d. h. zum Beispiel im Fall einer Erntemaschine (Ballenpresse, Feldhäcksler) aus seiner Kabine zu steigen, die Verstopfung an den zur Aufnahme oder Weiterförderung des Emteguts dienenden Elementen zu beseitigen und dann wieder zurück in die Kabine zu gehen, um den Erntebetrieb fortzusetzen, da der Grund für die Überlastung (d. h. bei der Erntemaschine die Verstopfung) auch nach Wiedereinschalten der Zapfwelle noch vorliegt (wenn er nicht vorher beseitigt wurde) und dazu führt, dass die Überlastkupplung weiterhin anspricht. Der beschriebene Vorgang ist zeitaufwändig, umständlich und unbequem.

In der DE 199 32 272 A1 wird zur Überwindung dieses Nachteils vorgeschlagen, Arbeitselemente einer Ballenpresse über Sicherheitskupplungen anzutreiben, deren Abschaltmoment durch Erhöhung des Arbeitsdrucks vergrößerbar ist. Wenn durch einen Drehzahlsensor eine Belastungsspitze an einer der Sicherheitskupplungen erfasst wird, wird selbsttätig deren Arbeitsdruck zur Überwindung der Belastungsspitze kurzfristig angehoben. Hat diese Anhebung eine Beseitigung der Ursache der Belastungsspitze zur Folge, wird der normale Arbeitsbetrieb wieder aufgenommen, anderenfalls werden der Arbeitsdruck der Sicherheitskupplung noch weiter erhöht und weitere Maßnahmen zum Abbau des Grundes der Überlast vorgenommen, wie eine Vergrößerung des Durchlassvermögens der Förderkanäle. Als nachteilig ist hier der relativ große Aufwand für die Sicherheitskupplungen mit veränderbarem Abschaltmoment anzusehen.

### Aufgabe

Das der Erfindung zugrunde liegende Problem wird darin gesehen, eine Antriebsanordnung und ein Verfahren zum Antrieb eines landwirtschaftlichen Arbeitsgeräts bereitzustellen, die auf einfache Weise eine Beseitigung des Grundes einer Überlastung von angetriebenen Elementen des Arbeitsgeräts ermöglichen.

### Lösung

Dieses Problem wird erfindungsgemäß durch die Lehre der Patentansprüche 1 und 13 gelöst, wobei in den weiteren Patentansprüchen Merkmale aufgeführt sind, die die Lösung in vorteilhafter Weise weiterentwickeln.

Eine Antriebsanordnung umfasst einen Antriebsmotor, bei dem es sich um einen Verbrennungsmotor oder einen Elektromotor handeln kann, der über eine trennbare Zapfwellenkupplung mit einem Zapfwellenausgang verbindbar ist. Das Arbeitsgerät weist einen Antriebsstrang auf, der mit dem Zapfwellenausgang verbunden ist oder werden kann und eine Überlastkupplung enthält, die bei Überschreitung eines Abschaltmoments öffnet. Eine elektronische Steuereinrichtung ist mit einem Aktor für die Zapfwellenkupplung und mit einem Sensor verbunden, der das Drehmoment am Zapfwellenausgang erfasst. Beim normalen Arbeitsbetrieb vergleicht die Steuereinrichtung den Messwert des Sensors mit einem ersten Schwellenwert, der einem Drehmoment entspricht, das kleiner als das Abschaltmoment der Überlastkupplung ist. Sobald der Messwert des Sensors den ersten Schwellenwert überschreitet, veranlasst die Steuereinrichtung den Aktor, die Zapfwellenkupplung zu öffnen, um den Antriebsstrang des Arbeitsgeräts abzuschalten und letzteres vor Überlastung zu schützen. Anschließend veranlasst die Steuereinrichtung wieder ein Schließen der Zapfwellenkupplung und ermöglicht dabei ein Drehmoment am Zapfwellenausgang, das größer als das Abschaltmoment der Überlastkupplung ist.

Auf diese Weise erfolgt die Abschaltung des Zapfwellenausgangs bereits bei einem Drehmoment, bei dem die Überlastkupplung des Antriebsstrangs des Arbeitsgeräts noch nicht anspricht. Die angetriebenen Elemente des Arbeitsgeräts sind bei der Abschaltung des Zapfwellenausgangs demnach noch nicht in einem Maße überlastet, dass ihre Überlastkupplung abschalten würde. Der zweite Versuch zur Beseitigung des Grunds der Überlast, z. B. einer Verstopfung in den Elementen zur Erntegutaufnahme einer Erntemaschine, erfolgt anschließend mit einem höheren erzielbaren Drehmoment als im normalen Arbeitsbetrieb, das auch größer ist als das Abschaltmoment der Überlastkupplung. Bei der nachfolgenden Inbetriebnahme des Zapfwellenausgangs lässt sich demnach in den meisten Fällen der Grund für die Überlastung durch die angetriebenen Elemente des Arbeitsgeräts abbauen. Somit erreicht man mit einfachen Mitteln eine effektive Absicherung des Antriebsstrangs des Arbeitsgeräts und eine Beseitigung des Grunds einer eventuellen Überlastung.

Die Steuereinrichtung kann das Einschalten der Zapfwellenkupplung nach einer

Überschreitung des ersten Schwellenwerts und einer dadurch ausgelösten Trennung der Zapfwellenkupplung selbsttätig veranlassen oder eine Bedienereingabe in eine geeignete Eingabeeinrichtung abwarten. Analog kann das höhere zulässige Drehmoment (das nach oben unbegrenzt oder begrenzt sein kann) nach einer Überschreitung des ersten Schwellenwerts und einer dadurch ausgelösten Trennung der Zapfwellenkupplung selbsttätig durch die Steuerung ausgewählt werden oder mittels einer Bedienereingabe in eine geeignete Eingabeeinrichtung erfolgen.

Vorzugsweise vergleicht die Steuereinrichtung nach einer Überschreitung des ersten Schwellenwerts und einer dadurch ausgelösten Trennung der Zapfwellenkupplung den Messwert des Sensors mit einem zweiten Schwellenwert, der einem Drehmoment entspricht, das größer als das Abschaltmoment der Überlastkupplung ist, und schaltet nur dann die Zapfwellenkupplung ab, wenn der Messwert des Sensors gleich dem oder größer als der zweite(n) Schwellenwert ist. Der zweite Schwellenwert kann derart bemessen sein, dass nur der Zapfwellenantrieb bis zum Zapfwellenausgang geschützt wird, oder dem Arbeitsgerät angepasst sein.

Der erste Schwellenwert hängt bei einer bevorzugten Ausführungsform der Erfindung vom Betriebszustand des Arbeitsgeräts ab, über den der Steuereinrichtung eine Information zugeführt wird. Dadurch kann der Tatsache Rechnung getragen werden, dass einige nicht angetriebene oder vom Zapfwellenausgang angetriebene Elemente des Arbeitsgeräts in unterschiedliche Positionen bringbar, abschaltbar oder mit unterschiedlichen Geschwindigkeiten antreibbar sein können, und das zum Antrieb des Arbeitsgeräts erforderliche Drehmoment beeinflussen. Ein Beispiel ist eine Schneideinrichtung einer Ballenpresse, die zu einem höheren Drehmomentbedarf führt. Ist das Element in einem Betriebszustand, der ein kleineres Antriebsmoment des gesamten Arbeitsgeräts zur Folge hat, wird zweckmäßigerweise auch der erste Schwellenwert gegenüber einem anderen Betriebszustand des Elements reduziert, der ein höheres Antriebsmoment des Arbeitsgeräts bedingt. Dadurch kann der erste Schwellenwert optimal an die zu schützenden Elemente des Arbeitsgeräts angepasst werden.

Das vom Sensor erfasste Drehmoment kann auch zur Begrenzung oder Regelung der Vortriebsgeschwindigkeit eines mit dem Arbeitsgerät verbundenen, es tragenden oder ziehenden Träger- oder Zugfahrzeugs verwendet werden. Die Vortriebsgeschwindigkeit wird durch die Steuereinrichtung selbsttätig auf einen Wert begrenzt oder gebracht, bei dem das vom Sensor erfasste Drehmoment einem Sollwert entspricht, der kleiner als der erste Schwellenwert ist. Eine derartige Begrenzung oder Regelung ist beispielsweise bei Ballenpressen sinnvoll, deren Messer im Einzugskanal positioniert sind. Sind die Messer außerhalb des Einzugskanals, erfolgt vorzugsweise nur die oben beschriebene Begrenzung des Drehmoments der Zapfwelle, aber keine Regelung oder Begrenzung der Vortriebsgeschwindigkeit. Bei einer anderen Ausführungsform ist aber auch bei außerhalb des Einzugskanals positionierten Messern eine Regelung oder Begrenzung der Vortriebsgeschwindigkeit möglich.

Im Falle, dass der Messwert des Sensors während des normalen Arbeitsbetriebs den ersten Schwellenwert erreicht oder überschreitet und die Zapfwellenkupplung durch den Aktor getrennt wird, bietet es sich an, ein mit dem Arbeitsgerät verbundenes, es tragendes oder ziehendes Träger- oder Zugfahrzeugs durch die Steuerung selbsttätig anzuhalten. Dadurch erreicht man, dass auch das Arbeitsgerät stehenbleibt und das davor liegende Feld nicht unbearbeitet bleibt.

Die vorliegende Erfindung eignet sich für beliebige Arbeitsgeräte, wie Ballenpressen für rechteckige oder runde Ballen mit fester oder veränderlicher Ballengröße, angebaute oder gezogene Feldhäcksler, Bodenbearbeitungsgeräte, Mähgeräte und dergleichen. Der Antriebsmotor kann sich auf einem Träger- oder Zugfahrzeug befinden, bei dem es sich insbesondere um einen Traktor handeln kann, und das das Arbeitsgerät trägt oder zieht, oder auf einem selbstfahrenden Arbeitsfahrzeug, beispielsweise einer selbstfahrenden Erntemaschine, wie einem Feldhäcksler, Baumwollernter, Mähdrescher oder einer selbstfahrenden Ballenpresse, wobei das Arbeitsgerät ein Erntevorsatz oder ein anderes Gerät zur Erntegutbearbeitung sein kann, wie ein Stängel- oder Strohhäcksler.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht eines landwirtschaftlichen Zugfahrzeugs in Form eines Traktors mit einem daran angehängten Arbeitsgerät in Form einer Rundballenpresse,
- Fig. 2: eine schematische Darstellung der Antriebsanordnung des Arbeitsgeräts,

- Fig. 3: ein Programmablaufschema, nach dem die Steuereinrichtung bei der Begrenzung des Drehmoments an der Zapfwelle und beim Begrenzen der Vortriebsgeschwindigkeit des Zugfahrzeugs arbeitet.

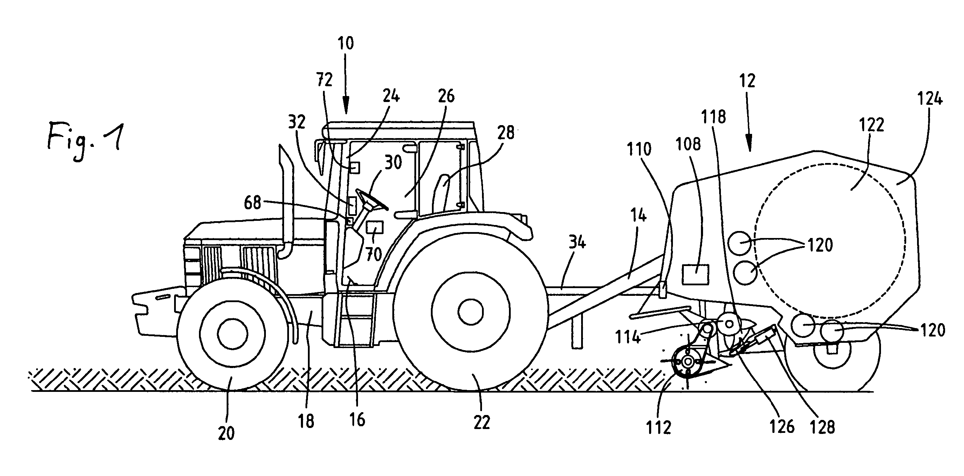

Die Figur 1 zeigt eine seitliche Ansicht eines landwirtschaftlichen Zugfahrzeugs 10 in Form eines Traktors und eines mittels einer Deichsel 14 an eine Anhängekupplung (nicht gezeigt) des Zugfahrzeugs 10 gekoppelten Arbeitsgerätes in Form einer an sich bekannten (s. EP 0 316 506 A) Rundballenpresse 12 variabler Presskammergröße. Das Zugfahrzeug 10 baut sich auf einem tragenden Rahmen 18 auf, der sich auf lenkbaren Vorderrädern 20 und antreibbaren Hinterrädern 22 abstützt und eine Kabine 24 trägt, in der sich ein Bedienerarbeitsplatz 26 befindet.

Der Bedienerarbeitsplatz 26 umfasst einen Sitz 28, ein Lenkrad 30, ein Gaspedal 16 und andere Pedale für Bremse und Kupplung (nicht gezeigt) und einige im Griffbereich des sich am Bedienerarbeitsplatz 26 befindlichen Bedieners angeordnete Eingabeelemente zur Vorgabe auswählbarer Funktionen des Zugfahrzeugs 10. Zu letzteren zählt eine Auswahleinrichtung 32 für die Übersetzungsstufe eines Zapfwellengetriebes 46, ein Handgashebel 70, ein Zapfwellenschalter 68 und ein virtuelles Terminal 72 eines nach ISO 11783 arbeitenden Bussystems mit einer Tastatur 90 und einer Anzeigeeinrichtung 94. Die Auswahleinrichtung 32 und/oder der Zapfwellenschalter 68 könnten auch als Menüpunkte auf dem Terminal 72 realisiert werden. Anstelle des Terminals 72 können auch beliebige andere Eingabe- und Anzeigeeinrichtungen verwendet werden. Das Gaspedal 16 ist mit einem Sensor versehen, der einer Bedienerschnittstellenlogik 64 elektrische Signale übermittelt, die Informationen über die jeweilige Stellung des Gaspedals 16 enthalten.

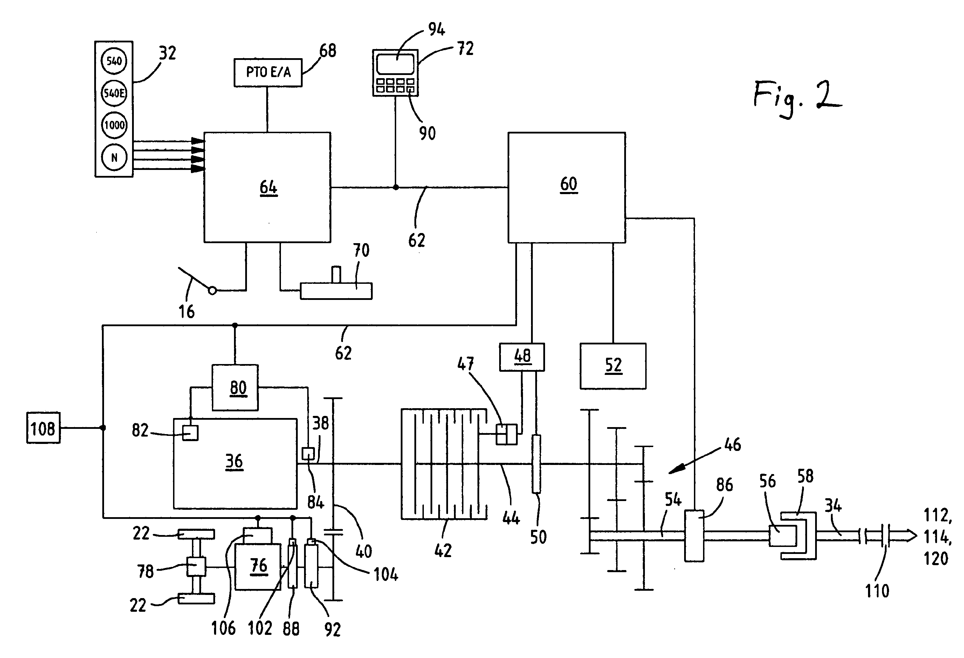

Die Figur 2 zeigt schematisch die Antriebsanordnung des Zugfahrzeugs 10 zum Antrieb der Hinterräder 22 und einer Zapfwelle 34, die zum Antrieb antreibbarer Elemente des Arbeitsgeräts 12 dient. Ein Antriebsmotor 36, in der Regel ein Dieselmotor, treibt eine Welle 38 an, die über ein Zahnrad 40 zum Antrieb der Hinterräder 22 und vorzugsweise auch der Vorderräder 20 und ggf. anderer antreibbarer Einrichtungen des Zugfahrzeugs 10, wie eines Kompressors einer Klimaanlage und eines Stromgenerators dient. Die Hinterräder 22 und ggf. Vorderräder 20 werden vom Zahnrad 40 her über eine Kupplung 88 und ein Fahrgetriebe mit stufenlos oder in Stufen wählbarer, in den einzelnen Übersetzungsstufen konstanter Übersetzung und ein Differenzialgetriebe 78 angetrieben.

In der dargestellten Ausführungsform umfasst das Fahrgetriebe ein Lastschaltgetriebe 92, welches Planetenradsätze mit Kupplungen und Bremsen enthält, die eine Umschaltung der Gänge unter Last ermöglichen, und ein nachgeschaltetes Synchronschaltgetriebe 76. Das Lastschaltgetriebe 92 und das Synchronschaltgetriebe 76 sind mit jeweils einem Aktor 104 bzw. 106 zur Auswahl der Übersetzungsstufe ausgeschaltet. In den Antriebsstrang zwischen dem Lastschaltgetriebe 92 und das Synchronschaltgetriebe 76 ist weiterhin eine Kupplung 88 eingefügt, die durch einen Kupplungsaktor 102 zwischen einer Schließ- und Öffnungsposition bewegbar ist. Die Welle 38 ist auch mit einer hydraulisch betätigbaren Zapfwellenkupplung 42 verbunden, die ausgangsseitig mit einer Eingangswelle 44 eines Zapfwellengetriebes 46 verbunden ist. Die Zapfwellenkupplung 42 wird mittels eines Aktors 47 betätigt, der durch einen Ventilzusammenbaus 48 gesteuert wird, der auch mit einer auf der Eingangswelle 44 angeordneten Bremse 50 verbunden ist.

Das Zapfwellengetriebe 46 weist drei unterschiedliche, auswählbare Übersetzungsstufen auf und umfasst daher drei kämmende Zahnradpaare. Die Übersetzungsstufe wird mittels eines elektrohydraulisch (oder elektrisch) fremdkraftbetätigten Aktors 52 ausgewählt, der mittels verschiebbarer Kopplungsglieder festlegt, welches der drei auf einer Abtriebswelle 54 des Zapiwellengetriebes 46 angeordneten Zahnräder in drehmomentschlüssiger Verbindung mit der Abtriebswelle 54 steht. Der Aktor 52 ermöglicht die Auswahl von drei Übersetzungsstufen, von denen in der vorliegende Ausführungsform eine erste bei der Nenndrehzahl des Antriebsmotors 36 von 2100/min eine Drehzahl der Abtriebswelle 54 von 1000/min ermöglicht, eine zweite bei einer abgesenkten Drehzahl des Antriebsmotors 36 von 1800/min eine Drehzahl der Abtriebswelle 54 von 540/min ermöglicht, und eine dritte bei der Nenndrehzahl des Antriebsmotors 36 von 2100/min eine Drehzahl der Abtriebswelle 54 von 540/min ermöglicht. Außerdem besteht die Möglichkeiten, keines der Zahnräder des Zapfwellengetriebes 46 mit der Eingangswelle 44 bzw. Abtriebswelle 54 zu koppeln, um das Zapfwellengetriebe 46 in eine Neutralstellung zu bringen, in der die Abtriebswelle 54 auch bei aktiver Bremse 50 frei drehbar ist.

Die Abtriebswelle 54 ist mit einem Zapfwellenausgang 56 in Form eines Zapfwellenstummels verbunden, auf den die mit einem Hohlwellenendstück 58 ausgestattete Zapfwelle 34 des Arbeitsgeräts 12 aufschiebbar ist. Die Zapfwelle 34 ist in der Regel als Gelenkwelle ausgeführt.

Eine elektronische Steuereinrichtung 60 ist mit dem Ventilzusammenbau 48 und mit dem Aktor 52 verbunden. Über einen Gerätebus 62 (z. B. CAN-Bus) ist sie außerdem mit einer Bedienerschnittstellenlogik 64 verbunden, die ihrerseits mit der Auswahleinrichtung 32, dem Gaspedal 16 und dem Handgashebel 70 und dem Zapfwellenschalter 68 verbunden ist. Über den Bus 62 ist die Steuereinrichtung 60 außerdem mit dem virtuellen Terminal 72, den Aktoren 104 und 106 und dem Kupplungsaktor 102 der Kupplung 88 verbunden. Die Auswahleinrichtung 32 ermöglicht dem Bediener durch manuelles Betätigen von einer von vier Drucktasten je eine der drei Übersetzungsstufen des Zapfwellengetriebes 46 oder die Neutralstellung auszuwählen. Die Bedienerschnittstellenlogik 64 übermittelt eine Information über die Vorgabe des Bedieners über den Bus 62 an die Steuereinrichtung 60, die ihrerseits den Aktor 52 entsprechend der erhaltenen Information ansteuert.

Verbringt der Bediener den Zapfwellenschalter 68 in die Betriebsposition, übermittelt die Bedienerschnittstellenlogik 64 eine entsprechende Information über den Bus 62 an die Steuereinrichtung 60, die ihrerseits den Ventilzusammenbau 48 veranlasst, die Bremse 50 zu lösen und über den Aktor 47 die Zapfwellenkupplung 42 zu schließen. Verbringt der Bediener den Zapfwellenschalter 68 in die Außerbetriebsposition, übermittelt die Bedienerschnittstellenlogik 64 analog eine entsprechende Information über den Bus 62 an die Steuereinrichtung 60, die ihrerseits den Ventilzusammenbau 48 anweist, den Aktor 47 zu veranlassen, die Zapfwellenkupplung 42 zu öffnen und die Bremse 50 zu aktivieren.

Die Steuereinrichtung 60 ist weiterhin über den Bus 62 mit einer Motorsteuerung 80 verbunden, die wiederum eine Einspritzanlage 82 des Antriebsmotors 36 steuert und der von einem Drehzahlsensor 84 eine Information über die jeweilige Drehzahl der Welle 38 zugeführt wird. Ein mit der Steuereinrichtung 60 verbundener Sensor 86 erfasst das von der Abtriebswelle 54 übertragene Drehmoment. Der Drehzahlsensor 84 kann mit der zugehörigen Welle 38 beispielsweise optisch (durch mit der Welle 38 verbundene gelochte Kodierscheiben, die mit Lichtschranken zusammenarbeiten) oder magnetisch (durch mit der Welle 38 verbundene Magnete, die mit Induktionsspulen, Reedrelais oder Hallsensoren zusammenarbeiten) zusammenwirken oder die Drehzahl auf beliebige andere Weise erfassen. Der Sensor 86 umfasst auf der Abtriebswelle 54 angeordnete Dehnungsmessstreifen, deren Anschlüsse durch Schleifkontakte mit der Steuereinrichtung 60 verbunden sind, um durch die durch das übertragene Drehmoment bedingte elastische Torsion der Abtriebswelle 54 zu erfassen. Es können auch beliebige andere Ausführungsformen für den Sensor 86 zur Anwendung kommen, beispielsweise Lasersensoren zur Erfassung der Torsion der Abtriebswelle 54. Eine Messung des Drehmoments kann auch derart erfolgen, dass durch Sensoren (nicht gezeigt) am Ein- und Ausgang der Zapfwellenkupplung 42 eine Drehzahlermittlung erfolgt, wobei der Kupplungsschlupf aus den vor und hinter der Zapfwellenkupplung 42 herrschenden Drehzahlen ermittelt wird, indem der Kupplungsschlupf laufend auf einen konstanten Wert eingestellt und gehalten wird und aus dem konstanten Schlupfwert und einem dem Kupplungsdruck entsprechenden Wert das durch die Zapfwellenkupplung 42 übertragene Drehmoment ermittelt wird.

An Bord des Arbeitsgeräts 12 wird das Drehmoment von der Zapfwelle 34 über eine Überlastkupplung 110, bei der es sich um eine beliebige Kupplung handeln kann, die bei Überschreiten eines definierten Drehmoments öffnet, beispielsweise um eine Rutschkupplung oder eine Nockenschaltkupplung, auf die angetriebenen Elemente des Arbeitsgerätes 12 übertragen. Dabei handelt es sich beispielsweise um einen Aufnehmer 112 für Erntegut, einen im Einzugskanal 118 stromab des Aufnehmers 112 angeordneten Förderrotor 114, und um antreibbare Walzen 120, die eine Ballenbildungskammer 122 umschließen. Das Arbeitsgerät 12 umfasst weiterhin hydraulisch angetriebene Aktoren, wie Hydraulikzylinder zum Öffnen einer rückwärtigen Tür 124, die mit der Bordhydraulik des Zugfahrzeugs 10 verbunden sind. Eine mit nebeneinander angeordneten Messern 126 ausgestattete Schneideinrichtung 126 kann mittels eines Aktors 128 in Form eines Hydraulikzylinders, der über ein mit dem Gerätebus 62 verbundenes Ventil (nicht gezeigt) mit der Bordhydraulik des Zugfahrzeugs 10 verbunden ist, wahlweise in den Einzugskanal 118 unterhalb des Förderrotors 114 eingeschwenkt oder aus dem Einzugskanal 118 herausgeschwenkt (oder in anderer Weise bewegt, z. B. verschoben) werden, was durch den Bediener über das virtuelle Terminal 72 und den Gerätebus 62 und das Ventil gesteuert wird. Eine Speichereinrichtung 108 an Bord des Arbeitsgeräts 12 ist mit dem Gerätebus 62 verbunden.

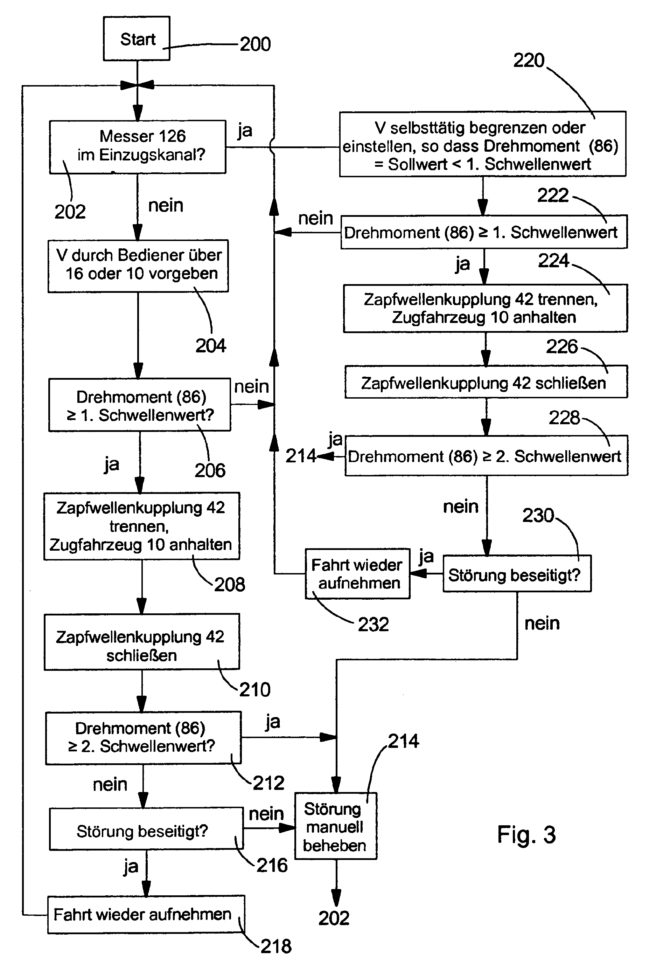

Während des Arbeitsbetriebs (Ernte) geht die Steuereinrichtung 60 nach dem Flussdiagramm gemäß Figur 3 vor.

Nach dem Start im Schritt 200 wird im Schritt 202 abgefragt, ob sich die Messer 126 im Einzugskanal 118 befinden. Ist das nicht der Fall, folgt der Schritt 204, in dem die Steuereinrichtung 60 die Motorsteuerung 80 anweist, den Antriebsmotor 36 mit einer Drehzahl laufen zu lassen, die der aktuellen Eingabe der Auswahleinrichtung 32 entspricht, d. h. je nach gedrückter Taste der Auswahleinrichtung 32 mit einer festen Drehzahl von 2100/min oder 1800/min, während die Übersetzungsstufe des Zapfwellengetriebes 46 auf einen für das Arbeitsgerät 12 geeigneten Wert gesetzt wird. Bei einer bevorzugten Ausführungsform werden die Motordrehzahl des Antriebsmotors 36 und die Übersetzungsstufe des Zapfwellengetriebes 46 anhand von Daten in der Speichereinrichtung 108 selbsttätig durch die Steuereinrichtung 60 eingestellt Außerdem wird im Schritt 204 die Vortriebsgeschwindigkeitdes Zugfahrzeugs 10 durch den Bediener über das Gaspedal 16 oder den Handgashebel 70 vorgegeben. Die Steuereinrichtung 60 steuert die Aktoren 104 und 106 und, vor und nach dem Betätigen des Aktors 106 den Kupplungsaktor 102 zum Öffnen und Schließen der Kupplung 88 an, so dass das Fahrgetriebe die Räder 22 mit der gewünschten Geschwindigkeit antreibt.

Das vom Sensor 86 gemessene Drehmoment an der Abtriebswelle 54 wird im Schritt 206 mit einem ersten Schwellenwert verglichen. Der erste Schwellenwert ist kleiner als das Abschaltmoment der Überlastkupplung 110. Er kann als Absolutwert oder Prozentsatz (z. B. 85 %) des Abschaltmoments der Überlastkupplung 110 durch den Bediener über das virtuelle Terminal 72 eingegeben werden oder aus der Speichereinrichtung 108 ausgelesen werden, wobei im zweiten Fall auch das Abschaltmoment der Überlastkupplung 110 aus der Speichereinrichtung 108 ausgelesen wird. Ist das Drehmoment an der Abtriebswelle 54 und somit an der Zapfwelle 34 kleiner als der erste Schwellenwert, kann von einem ordnungsgemäßen Betrieb des Arbeitsgeräts ausgegangen werden und es folgt wieder der Schritt 202.

Anderenfalls ist davon auszugehen, dass ein Emtegutstau am Aufnehmer 112 oder am Förderrotor 116 oder eine andere Störung am Arbeitsgerät 12 vorliegt. Im Schritt 208 veranlasst die Steuereinrichtung 60 somit, dass der Aktor 47 die Zapfwellenkupplung 42 trennt, um den Antrieb der angetriebenen Elemente des Arbeitsgeräts 12 zu unterbrechen. Außerdem kann die Bremse 50 aktiviert werden. Weiterhin wird auch das Zugfahrzeug 10 angehalten, beispielsweise durch Trennen der Kupplung 88, und eine Parkbremse des Zugfahrzeugs 10 und ggf. des Arbeitsgeräts 12 wird aktiviert.

Es folgt dann der Schritt 210, in dem die Steuereinrichtung 60 selbsttätig oder auf eine Bedienereingabe über das virtuelle Terminal 72 hin den Aktor 47 veranlasst, die Zapfwellenkupplung 42 wieder zu schließen, ggf. nachdem die Bremse 50 wieder gelöst ist. Der Antriebsmotor 36 läuft weiterhin mit der ausgewählten Drehzahl. Es wird demnach versucht, die Störung mit einem Drehmoment zu beseitigen, das größer ist als das Abschaltmoment der Überlastkupplung 110.

Die Steuereinrichtung 60 vergleicht im sich anschließenden Schritt 212 den Drehmomentwert des Sensors 86 mit einem zweiten Schwellenwert, der größer als das Abschaltmoment der Überlastkupplung 110 ist. Dieser zweite Schwellenwert kann durch die Kapazität des Antriebsmotors 36 und des Zapfwellengetriebes 46 vorgegeben sein und fest in der Steuereinrichtung 60 abgelegt sein. Alternativ wird er als Absolutwert oder Mehrfaches des ersten Schwellenwerts oder Abschaltmoments der Überlastkupplung 110 durch den Bediener über das virtuelle Terminal 72 eingegeben oder aus der Speichereinrichtung 108 ausgelesen.

Falls im Schritt 212 das Drehmoment an der Abtriebswelle 54 und demnach an der Zapfwelle 34 gleich dem oder größer als der zweite(n) Schwellenwert ist, liegt weiterhin eine Störung vor (möglicherweise an der Überlastkupplung 110, die nicht beim gewünschten Drehmoment öffnet oder am Sensor 86), so dass dann der Schritt 214 folgt, in dem die Kupplung 42 wieder geöffnet und die Bremse 50 geschlossen wird. Der Schritt 212 dient demnach in erster Linie zum Schutz der Antriebselemente an Bord der Zugmaschine 10. Der Bediener muss dann seinen Bedienerarbeitsplatz 26 verlassen und versuchen, die Störung zu beheben. Bei Erfolg folgt dann wieder der Schritt 202.

Falls in Schritt 212 das mit dem Sensor 86 erfasste Drehmoment kleiner als der zweite Schwellenwert ist, folgt der Schritt 216, in dem die Steuereinrichtung 60 prüft, ob die Störung beseitigt wurde. Von einer Beseitigung der Störung kann beispielsweise davon ausgegangen werden, wenn das Drehmoment am Sensor 86 zuerst relativ hoch (in der Nähe des Abschaltmoments der Überlastkupplung 110) lag und dann wieder auf einen kleineren Wert, der aber größer als Null ist, abgesunken ist, da man dann davon ausgehen kann, dass eine Verstopfung am Aufnehmer 112 oder am Förderrotor 114 vorlag, die zunächst zum Anstieg des Drehmoments über den ersten Schwellenwert führte und dann bei ihrer Beseitigung den höheren Drehmomentwert bedingte. Um zu prüfen, ob die Störung tatsächlich beseitigt wurde, kann auch eine Bedienereingabe, beispielsweise in das virtuelle Terminal 72 erfolgen, mit der die Beseitigung der Störung bestätigt wird, oder es wird erfasst, ob sich die Überlastkupplung ausgangsseitig dreht. Wurde im Schritt 216 die Störung nicht beseitigt, folgt ebenfalls der Schritt 214, anderenfalls der Schritt 218, in dem die Steuereinrichtung 60 veranlasst, dass das Zugfahrzeug wieder in Bewegung versetzt wird, indem der Kupplungsaktor 102 die Kupplung 88 schließt und sukzessive geeignete Übersetzungsstufen der Getriebe 76 und 92 verwendet werden, um das Zugfahrzeug 10 mit dem Arbeitsgerät 12 hinreichend sanft zu beschleunigen. Es folgt dann der Schritt 202.

Falls der Schritt 202 hingegen ergeben hat, dass die Messer 126 sich im Einzugskanal 118 befinden, folgt der Schritt 220. In diesem Schritt 220 wird die Vortriebsgeschwindigkeit des Zugfahrzeugs 10 entweder durch den Bediener über den Handgashebel 70 oder das Gaspedal 16 vorgegeben und in einer Weise durch die Steuereinrichtung 60 begrenzt, dass das vom Sensor 86 erfasste Drehmoment kleiner oder gleich einem Sollwert ist, oder die wird Vortriebsgeschwindigkeit wird durch die Steuereinrichtung 60 selbsttätig derart geregelt, dass das vom Sensor 86 erfasste Drehmoment zumindest etwa gleich dem Sollwert ist. Dieser Sollwert ist kleiner als der erste Schwellenwert und kann als Absolutwert oder Prozentsatz (z. B. 75 %) des Abschaltmoments der Überlastkupplung 110 durch den Bediener über das virtuelle Terminal 72 eingegeben werden oder aus der Speichereinrichtung 108 ausgelesen werden. Hinsichtlich der Einzelheiten einer derartigen Geschwindigkeitsregelung, bei der auch die Größe des jeweils gerade erstellten Ballens berücksichtigt werden kann, wird auf die Offenbarung der DE 10 2005 029 405 A1 verwiesen . Das Zugfahrzeug 10 wird demnach kontinuierlich mit einer Geschwindigkeit angetrieben, die eine Erntegutaufnahmerate zur Folge hat, bei der sich ein Drehmoment an der Zapfwelle 54 ergibt, das kleiner als der erste Schwellenwert ist. Falls plötzlich größere Erntegutmengen aufzunehmen sind, oder das Erntegut schwerer zu fördern ist, beispielsweise aufgrund hoher Feuchtigkeit, kann die Steuereinrichtung 60 die sich anbahnende Überlastung problemlos erfassen und reagieren, ohne dass die Überlastkupplung 110 anspricht.

Auf den Schritt 220 folgt demnach der Schritt 222, der dem Schritt 206 entspricht, und dem wieder der Schritt 202 folgt, wenn das vom Sensor 86 gemessene Drehmoment kleiner als der erste Schwellenwert ist. Anderenfalls folgt der Schritt 224, der dem Schritt 208 entspricht, auf den der Schritt 226 folgt, der dem Schritt 210 entspricht, auf welchen wiederum der Schritt 228 erfolgt, der dem Schritt 212 entspricht. Wenn das durch den Sensor 86 erfasste Drehmoment im Schritt 228 gleich dem oder größer als der zweite(n) Schwellenwert ist, folgt ebenfalls der Schritt 214, während anderenfalls der Schritt 230 folgt, der dem Schritt 216 entspricht. Ergibt der Schritt 230, dass die Störung beseitigt wurde, folgt der dem Schritt 218 entsprechende Schritt 232, während anderenfalls der Schritt 214 folgt.

Nach alledem lässt sich die Vorgehensweise der Steuerung 72 derart zusammenfassen, dass Im normalen Arbeitsbetrieb die Zapfwettenkupptung 42 abgeschaltet wird, wenn ein Drehmoment am Sensor 86 erfasst wird, das kleiner als das Abschaltmoment der Überlastkupplung 110 ist. Nach einer Abschaltung wird an der Zapfwelle 34 ein größeres Drehmoment zugelassen, um mittels der noch vorhandenen Drehmomentreserve die Störung oder Überlastung zu entfernen.

## Patentansprüche

1. Antriebsanordnung zum Antrieb eines landwirtschaftlichen Arbeitsgeräts (12), umfassend:
einen Antriebsmotor (36), der über eine trennbare Zapfwellenkupplung (42) mit einem Zapfwellenausgang (56) in Antriebsverbindung verbringbar ist,
einen mit dem Zapfwellenausgang (56) verbundenen oder verbindbaren Antriebsstrang des Arbeitsgeräts (12), der eine Überlastkupplung (110) umfasst, die den Antriebsstrang öffnet, wenn ein Abschaltmoment überschritten wird, und
eine Steuereinrichtung (60), die mit einem zur Erfassung des Drehmoments am Zapfwellenausgang (56) eingerichteten Sensor (86) verbunden und betreibbar ist, einen Aktor (47) zu veranlassen, die Zapfwellenkupplung (42) zu trennen, sobald das vom Sensor (86) erfasste Drehmoment einen vorbestimmten Schwellenwert erreicht oder überschreitet,
**dadurch gekennzeichnet, dass** die Steuereinrichtung (60) betreibbar ist, im normalen Arbeitsbetrieb einen ersten Schwellenwert zu verwenden, der einem Drehmoment entspricht, das kleiner als das Abschaltmoment der Überlastkupplung (110) ist,
und dass die Steuereinrichtung (60) betreibbar ist, nach einer Überschreitung des ersten Schwellenwerts und einer **dadurch** ausgelösten Trennung der Zapfwellenkupplung (42) den Aktor (47) zu veranlassen, die Zapfwellenkupplung (42) zu schließen und bei geschlossener Zapfwellenkupplung (42) ein Drehmoment am Zapfwellenausgang (56) zuzulassen, das größer ist als das Abschaltmoment der Überlastkupplung (110).

2. Antriebsanordnung nach Anspruch 1, **dadurch gekennzeichnet, dass** die Steuereinrichtung (60) betreibbar ist, das Wiederverbinden der Zapfwellenkupplung (42) nach einer Überschreitung des ersten Schwellenwerts selbsttätig oder auf eine Bedienereingabe hin durchzuführen.

3. Antriebsanordnung nach Anspruch 1 oder 2, **dadurch gekennzeichnet, dass** die Steuereinrichtung (60) betreibbar ist, nach einer Überschreitung des ersten Schwellenwerts und einer **dadurch** ausgelösten Trennung der Zapfwellenkupplung (42) den Aktor (47) zu veranlassen, die Zapfwellenkupplung (42) zu schließen und dann den Aktor (47) zu veranlassen, die Zapfwellenkupplung (42) zu trennen, sobald das vom Sensor (86) erfasste Drehmoment einen zweiten Schwellenwert erreicht oder überschreitet, der einem Drehmoment entspricht, das größer als das Abschaltmoment der Überlastkupplung (110) ist.

4. Antriebsanordnung nach einem der Ansprüche 1 bis 3, **dadurch gekennzeichnet, dass** die Steuereinrichtung (60) betreibbar ist, nach einer Überschreitung des ersten Schwellenwerts selbsttätig oder auf eine Bedienereingabe hin ein Drehmoment an der Zapfwelle (56) zuzulassen, das größer ist als das Abschaltmoment der Überlastkupplung (110).

5. Antriebsanordnung nach einem der Ansprüche 1 bis 4, **dadurch gekennzeichnet, dass** der Steuereinrichtung (60) eine Information hinsichtlich eines Betriebszustands des Arbeitsgeräts (12) zuführbar ist, und dass die Steuereinrichtung (60) betreibbar ist, den ersten Schwellenwert abhängig vom Betriebszustand zu wählen.

6. Antriebsanordnung nach einem der Ansprüche 1 bis 5, **dadurch gekennzeichnet, dass** die Steuereinrichtung (60) betreibbar ist, die Vortriebsgeschwindigkeit eines mit dem Arbeitsgerät (12) verbundenen Träger- oder Zugfahrzeugs (10) selbsttätig derart zu begrenzen oder vorzugeben, dass das vom Sensor (86) erfasste Drehmoment einen Sollwert nicht überschreitet oder erreicht, der kleiner als der erste Schwellenwert ist.

7. Antriebsanordnung nach einem der Ansprüche 1 bis 6, **dadurch gekennzeichnet, dass** der erste und/oder zweite Schwellenwert durch den Bediener in eine Eingabeeinrichtung (72) eingebbar oder aus einer Speichereinrichtung (108) auslesbar ist, die sich auf dem Arbeitsgerät (12) befindet.

8. Antriebsanordnung nach einem der Ansprüche 1 bis 7, **dadurch gekennzeichnet, dass** die Steuereinrichtung (60) betreibbar ist, ein mit dem Arbeitsgerät (12) verbundenes Träger- oder Zugfahrzeug (10) selbsttätig anzuhalten, wenn das vom Sensor (86) erfasste Drehmoment den ersten Schwellenwert erreicht oder überschreitet.

9. Kombination aus einem Träger- oder Zugfahrzeug (10), einem Arbeitsgerät (12) und einer Antriebsanordnung nach einem der vorhergehenden Ansprüche.

10. Kombination nach Anspruch 9, **dadurch gekennzeichnet, dass** das Arbeitsgerät (12) eine Ballenpresse ist.

11. Kombination nach Anspruch 10, wobei der Anspruch 9 auf Anspruch 5 oder einen davon abhängigen Anspruch rückbezogen ist, **dadurch gekennzeichnet, dass** der Betriebszustand des Arbeitsgeräts (12) die Position von Messern (126) repräsentiert, die wahlweise in einen Förderkanal (118) einbringbar sind.

12. Kombination nach Anspruch 11, wobei der Anspruch 9 auf Anspruch 6 oder einen davon abhängigen Anspruch rückbezogen ist, **dadurch gekennzeichnet, dass** die Steuereinrichtung (60) betreibbar ist, nur bei in den Förderkanal verbrachten Messern (126) die Vortriebsgeschwindigkeit derart zu begrenzen oder vorzugeben, dass das vom Sensor (86) erfasste Drehmoment einen Sollwert nicht überschreitet oder erreicht.

13. Verfahren zum Antrieb eines landwirtschaftlichen Arbeitsgeräts (12), umfassend folgende Schritte:
Betreiben eines Antriebsmotors (36), der über eine trennbare Zapfwellenkupplung (42) mit einem Zapfwellenausgang (56) in Antriebsverbindung steht,
Betreiben eines mit dem Zapfwellenausgang (56) verbundenen Antriebsstrang des Arbeitsgeräts (12), der eine Überlastkupplung (110) umfasst, die den Antriebsstrang öffnet, wenn ein Abschaltmoment überschritten wird,
Betreiben einer Steuereinrichtung (60), die mit das Drehmoment am Zapfwellenausgang (56) erfassenden Sensor (86) verbunden ist und einen Aktor (47) veranlasst, die Zapfwellenkupplung (42) zu trennen, sobald das vom Sensor (86) erfasste Drehmoment einen vorbestimmten Schwellenwert erreicht oder überschreitet,
**dadurch gekennzeichnet, dass** die Steuereinrichtung (60) im normalen Arbeitsbetrieb einen ersten Schwellenwert verwendet, der einem Drehmoment entspricht, das kleiner als das Abschaltmoment der Überlastkupplung (110) ist,
und dass die Steuereinrichtung (60) nach einer Überschreitung des ersten Schwellenwerts und einer **dadurch** ausgelösten Trennung der Zapfwellenkupplung (42) den Aktor (47) veranlasst, die Zapfwellenkupplung (42) zu schließen und bei geschlossener Zapfwellenkupplung (42) ein Drehmoment am Zapfwellenausgang (56) zulässt, das größer ist als das Abschaltmoment der Überlastkupplung (110).

## Claims

1. Drive assembly for driving an agricultural implement (12), comprising:
a drive motor (36) which can be drive-connected via a disconnectable power takeoff clutch (42) to a power takeoff output (56),
a drive train of the implement (12), which drive train is connected or can be connected to the power takeoff output (56) and comprises an overload clutch (110) which opens the drive train when a switch off torque is exceeded, and
a control device (60) which is connected to a sensor (86) which is configured for sensing the torque at the power takeoff output (56) and can be operated so as to cause an actuator (47) to disconnect the power takeoff clutch (42) as soon as the torque sensed by the sensor (86) reaches or exceeds a predetermined threshold value,
**characterized in that** the control device (60) can be operated so as to use, in the normal operating mode, a first threshold value which corresponds to a torque which is lower than the switch off torque of the overload clutch (110),
and **in that** the control device (60) can be operated so as to cause the actuator (47) to close the power takeoff clutch (42) after the first threshold value has been exceeded and disconnection of the power takeoff clutch (42) has been triggered as a result, and to permit, in the case of a closed power takeoff clutch (42), a torque at the power takeoff output (56) which is higher than the switch off torque of the overload clutch (110).

2. Drive assembly according to Claim 1, **characterized in that** the control device (60) can be operated so as to reconnect the power takeoff clutch (42) automatically or in response to an operator input after the first threshold value has been exceeded.

3. Drive assembly according to Claim 1 or 2, **characterized in that** the control device (60) can be operated so as to cause the actuator (47) to close the power takeoff clutch (42) after the first threshold value has been exceeded and disconnection of the power takeoff clutch (42) has been triggered as a result, and then to cause the actuator (47) to disconnect the power takeoff clutch (42) as soon as the torque which has been sensed by the sensor (86) reaches or exceeds a second threshold value which corresponds to a torque which is higher than the switch off torque of the overload clutch (110).

4. Drive assembly according to one of Claims 1 to 3, **characterized in that** the control device (60) can be operated so as to permit, automatically or in response to an operator input, a torque at the power takeoff (56) which is higher than the switch off torque of the overload clutch (110), after the first threshold value has been exceeded.

5. Drive assembly according to one of Claims 1 to 4, **characterized in that** information relating to an operating state of the implement (12) can be fed to the control device (60), and **in that** the control device (60) can be operated so as to select the first threshold value as a function of the operating state.

6. Drive assembly according to one of Claims 1 to 5, **characterized in that** the control device (60) can be operated so as to automatically limit the propulsion speed of a carrier vehicle or traction vehicle (10) connected to the implement (12), or to predefine that the torque sensed by the sensor (86) does not exceed or reach a setpoint value which is lower than the first threshold value.

7. Drive assembly according to one of Claims 1 to 6, **characterized in that** the first and/or second threshold values can be input by the operator into an input device (72) and read out from a storage device (108) which is located on the implement (12).

8. Drive assembly according to one of Claims 1 to 7, **characterized in that** the control device (60) can be operated so as to automatically stop a carrier vehicle or traction vehicle (10) connected to the implement (12), when the torque which is sensed by the sensor (86) reaches or exceeds the first threshold value.

9. Combination of a carrier vehicle or a traction vehicle (10), an implement (12) and a drive assembly according to one of the preceding claims.

10. Combination according to Claim 9, **characterized in that** the implement (12) is a baling press.

11. Combination according to Claim 10, therein Claim 9 is referred back to Claim 5 or to a claim dependent thereon, **characterized in that** the operating state of the implement (12) represents the position of blades (126) which can be optionally introduced into a conveying duct (118).

12. Combination according to Claim 11, therein Claim 9 is referred back to Claim 6 or to a claim dependent thereon, **characterized in that** the control device (60) can be operated in such a way that, only when blades (126) are moved into the conveying duct, it limits the propulsion speed or predefines that the torque sensed by the sensor (86) does not exceed or reach a setpoint value.

13. Method for driving an agricultural implement (12), comprising the following steps:
operation of a drive motor (36) which is drive-connected via a disconnectable power takeoff clutch (42) to a power takeoff output (56),
operation of a drive train of the implement (12), which drive train is connected to the power takeoff output (56) and comprises an overload clutch (110) which opens the drive train when a switch off torque is exceeded,
operation of a control device (60) which is connected to a sensor (86) which senses the torque at the power takeoff output (56), and causes an actuator (47) to disconnect the power takeoff clutch (42) as soon as the torque sensed by the sensor (86) reaches or exceeds a predetermined threshold value,
**characterized in that** the control device (60) uses, in the normal operating mode, a first threshold value which corresponds to a torque which is lower than the switch off torque of the overload clutch (110),
and **in that** the control device (60) causes the power takeoff clutch (42) to close after the first threshold value has been exceeded and disconnection of the power takeoff clutch (42) has been triggered as a result, and permits a torque at the power takeoff output (56) which is higher than the switch off torque of the overload clutch (110), when the power takeoff clutch (42) is closed.

## Revendications

1. Système d'entraînement pour l'entraînement d'un appareil de travail agricole (12), comprenant:
- un moteur d'entraînement (36), qui peut être mis en liaison d'entraînement avec une sortie de prise de force (56) au moyen d'un embrayage de prise de force séparable (42),
- une ligne d'entraînement de l'appareil de travail (12), qui est ou peut être reliée à la sortie de prise de force (56), qui comprend un accouplement de surcharge (110), qui ouvre la ligne d'entraînement lorsqu'un couple de découplage est dépassé, et
- un dispositif de commande (60), qui est relié à un capteur (86) conçu pour détecter le couple de rotation à la sortie de prise de force (56) et qui peut être employé pour commander à un actionneur (47) de séparer l'embrayage de prise de force (42), dès que le couple de rotation détecté par le capteur (86) atteint ou dépasse une valeur de seuil prédéterminée,
**caractérisé en ce que** le dispositif de commande (60) peut être employé, en service de travail normal, pour utiliser une première valeur de seuil qui correspond à un couple de rotation, qui est inférieur au couple de découplage de l'accouplement de surcharge (110),
et **en ce que** le dispositif de commande (60) peut être employé, après un dépassement de la première valeur de seuil et une séparation ainsi provoquée de l'embrayage de prise de force (42), pour commander à l'actionneur (47) de fermer l'embrayage de prise de force (42) et, une fois l'embrayage de prise de force (42) fermé, d'autoriser à la sortie de prise de force (56) un couple de rotation qui est supérieur au couple de découplage de l'accouplement de surcharge (110).

2. Système d'entraînement selon la revendication 1, **caractérisé en ce que** le dispositif de commande (60) peut être employé pour exécuter, automatiquement ou sur une instruction d'un opérateur, le ré-enclenchement de l'embrayage de prise de force (42) après un dépassement de la première valeur de seuil.

3. Système d'entraînement selon la revendication 1 ou 2, **caractérisé en ce que** le dispositif de commande (60) peut être employé, après un dépassement de la première valeur de seuil et une séparation ainsi provoquée de l'embrayage de prise de force (42), pour commander à l'actionneur (47) de fermer l'embrayage de prise de force (42) et ensuite commander à l'actionneur (47) de séparer l'embrayage de prise de force (42), dès que le couple de rotation détecté par le capteur (86) atteint ou dépasse une deuxième valeur de seuil, qui correspond à un couple de rotation, qui est supérieur au couple de découplage de l'accouplement de surcharge (110).

4. Système d'entraînement selon l'une quelconque des revendications 1 à 3, **caractérisé en ce que** le dispositif de commande (60) peut être employé, après un dépassement de la première valeur de seuil, pour autoriser à la prise de force (56), automatiquement ou sur instruction d'un opérateur, un couple de rotation qui est supérieur au couple de découplage de l'accouplement de surcharge (110).

5. Système d'entraînement selon l'une quelconque des revendications 1 à 4, **caractérisé en ce que** l'on peut fournir au dispositif de commande (60) une information concernant un état de fonctionnement de l'appareil de travail (12), et **en ce que** le dispositif de commande (60) peut être employé pour choisir la première valeur de seuil en fonction de l'état de fonctionnement.

6. Système d'entraînement selon l'une quelconque des revendications 1 à 5, **caractérisé en ce que** le dispositif de commande (60) peut être employé pour limiter ou prédéterminer automatiquement la vitesse d'avance d'un véhicule de support ou de traction (10) relié à l'appareil de travail (12), de telle manière que le couple de rotation détecté par le capteur (86) ne dépasse pas ou n'atteigne pas une valeur de consigne, qui est inférieure à la première valeur de seuil.

7. Système d'entraînement selon l'une quelconque des revendications 1 à 6, **caractérisé en ce que** la première et/ou la deuxième valeur de seuil peut être introduite par l'opérateur dans un dispositif d'entrée (72) ou peut être lue dans un dispositif de mémoire (108), qui se trouve sur l'appareil de travail (12).

8. Système d'entraînement selon l'une quelconque des revendications 1 à 7, **caractérisé en ce que** le dispositif de commande (60) peut être employé pour arrêter automatiquement un véhicule de support ou de traction (10) relié à l'appareil de travail (12), lorsque le couple de rotation détecté par le capteur (86) atteint ou dépasse la première valeur de seuil.

9. Combinaison d'un véhicule de support ou de traction (10), un appareil de travail (12) et un système d'entraînement selon l'une quelconque des revendications précédentes.

10. Combinaison selon la revendication 9, **caractérisée en ce que** l'appareil de travail (12) est une presse à balles.

11. Combinaison selon la revendication 10, dans laquelle la revendication 9 est reliée à la revendication 5 ou à une revendication dépendant de celle-ci, **caractérisée en ce que** l'état de fonctionnement de l'appareil de travail (12) représente la position de couteaux (126), qui peuvent être introduits au choix dans un canal d'alimentation (118).

12. Combinaison selon la revendication 11, dans laquelle la revendication 9 est reliée à la revendication 6 ou à une revendication dépendant de celle-ci, **caractérisée en ce que** le dispositif de commande (60) peut être employé, uniquement lorsque des couteaux (126) sont introduits dans le canal d'alimentation, pour limiter ou prédéterminer la vitesse d'avance, de telle manière que le couple de rotation détecté par le capteur (86) ne dépasse pas ou n'atteigne pas une valeur de consigne.

13. Procédé pour entraîner un appareil de commande agricole (12), comprenant les étapes suivantes:
- actionner un moteur d'entraînement (36), qui est en liaison d'entraînement avec une sortie de prise de force (56) au moyen d'un embrayage de prise de force séparable (42),
- actionner une ligne d'entraînement de l'appareil de travail (12), reliée à la sortie de prise de force (56), qui comprend un accouplement de surcharge (110) qui ouvre la ligne d'entraînement lorsqu'un couple de découplage est dépassé,
- actionner un dispositif de commande (60), qui est relié à un capteur (86) détectant le couple de rotation à la sortie de prise de force (56) et qui commande à un actionneur (47) de séparer l'embrayage de prise de force (42), dès que le couple de rotation détecté par le capteur (86) atteint ou dépasse une valeur de seuil prédéterminée,
**caractérisé en ce que** le dispositif de commande (60) utilise, en fonctionnement de travail normal, une première valeur de seuil qui correspond à un couple de rotation, qui est inférieur au couple de découplage de l'accouplement de surcharge (110),
et **en ce que**, après un dépassement de la première valeur de seuil et une séparation ainsi provoquée de l'embrayage de prise de force (42), le dispositif de commande (60) commande à l'actionneur (47) de fermer l'embrayage de prise de force (42) et, une fois l'embrayage de prise de force (42) fermé, d'autoriser à la sortie de prise de force (56) un couple de rotation qui est supérieur au couple de découplage de l'accouplement de surcharge (110).
